# EUROPEAN PATENT APPLICATION

(11) **EP 1 686 446 A1**
(43) Date of publication of application: **02.08.2006**
(21) Application number: 06001946.0
(22) Date of filing: 31.01.2006
(51) Int. Cl.: G06F 1/16, H04M 1/02

(54) **Portable device with programmable housing**

(30) Priority: 01.02.2005 US 48355
(71) Applicant: SAP AG, 69190 Walldorf (DE)
(72) Inventor: Vayssiere, Julien J. P., Red Hill, QLD 4059 (AU)
(74) Representative: Müller-Boré & Partner Patentanwälte

(57) **Abstract**

Embodiments of the present invention include a portable device with a programmable housing that changes appearance in accordance with data inputs. In one embodiment, the portable device comprises a rigid housing having an outer surface, wherein the outer surface forms a contoured outer surface of at least a first portion of said portable device, electronic paper attached to at least a second portion of the outer surface of the rigid housing, the electronic paper having a first input for receiving power and a second input for receiving data, wherein the electronic paper forms an image corresponding to the data received on the second input, thereby changing the appearance of at least the second portion of the portable device.

## Description

### BACKGROUND

The present invention relates to portable devices, and in particular, to a portable device with a programmable housing.

Size reductions and other advances in electronic and mechanical technologies have led to a growing prevalence of portable devices in society. Portable devices are used in a variety of applications. Such devices include, but are not limited to, cell phones, personal digital assistants ("PDA"), digital cameras, portable music players, laptop computers and pagers, for example. Portable devices typically include a housing that covers the internal electronics and other components of the device. The housing also typically forms the outer surface of the device, and gives the device a rigid structure so a user may hold the device.

Many portable devices also include a display, which is a distinct electronic component that is a separate element from the housing. The display allows a user to view graphics or text. One common display screen is an LCD display. The LCD display is mounted inside the portable device and is viewable through a hole or opening in the outer surface of the portable device. In other words, to make the LCD display viewable by a user, the housing is designed so that the housing outer surface does not completely encapsulate the display. Instead, the LCD display is mounted inside the housing, sometimes flush with the housing outer surface, so that the viewable portions of the LCD display can be seen through the opening in the housing. Thus, the viewable area of the LCD display is typically limited to the opening in the outer surface of the housing. Openings in the housing may also be available for electrical connections, buttons, switches or other internal components of the portable device.

Recently, it has become desirable to allow users of portable devices to customize their devices in various ways. For example, mobile phone manufacturers provide users with several different ways to customize their mobile phones. Many contemporary phones now include customizable ring tones. Ring tones may be selected by a user from a set of ring tones that come with the phone, or the user may download ring tones from a third-party ring tone provider. Another form of customization is in the form of logos, which is a stylized graphic image. Some mobile phones allow users to select between different logos that may be displayed on the occurrence of different events. For instance, a particular logo may be displayed when a person calls a cell phone that has been programmed to display the logo or graphic when a call is received from that person. Logos, just like ring tones, can be downloaded and displayed on the screen. Ring tones and logos can be downloaded and installed by the user, or even created by the user. This is possible because both ring tones and logos are purely software artifacts.

Another form of customization offered for cell phones are aesthetic covers that attach to the outer surface of the housing, typically to the front portion of the device (i.e., a faceplate). For example, a user may purchase a cell phone cover made of plastic that mechanically attaches to the front of the cell phone and covers the outer housing surface of the front of the cell phone. Covers featuring different colors and patterns can be purchased by users to change the look of their phones. These changeable covers or faceplates may come in different colors or patterns, and are typically changed according to a user's particular preference on any given day. From a mechanical perspective, such covers are typically made of a thin rigid plastic that includes several openings for the display screen or buttons.

One problem with LCD display technology is that logos and other graphics can only be displayed over a limited area of the cell phone defined by the size of the LCD display. Some cell phones attempt to solve this limitation by increasing the size of the LCD display. However, as the size of the LCD display increases, the cost and power consumption of the cell phone also increases. Also, LCD displays are thick flat rigid structures. Thus as the LCD display size is increased, there is an inherent limitation on the area of the outer surface of the phone that can be non-flat. In some cases this may be problematic because portable device manufacturers often try to differentiate themselves by designing aesthetic or otherwise stylish contoured outer surfaces. Since the housing is the structure that gives the cell phones and other portable devices shape, if the LCD display is too large, a correspondingly large portion of the portable device outer surface will be flat. Thus, either the size of the portable device housing must be increased to accommodate aesthetic curves or angles, or the area of the housing outer surface must be decreased.

Changeable covers also have limitations. For example, while changeable covers allow a user to change the appearance of the portable device, the user is limited in choices to the number of distinct covers that the user owns. This is because the covers are static. In other words, changeable covers or faceplates cannot change or alter their appearance once they are on the phone. Thus, if a user desires a new look for the phone, the user must either carry other faceplates around or return to the location where the faceplates are stored. Also, if the user desires a color or pattern that they do not already own, the user must go out and purchase a new faceplate. Additionally, faceplates are limited to changing the color or pattern of the phone. Thus, faceplates cannot be used to convey any form of information.

The present invention provides a completely new approach to portable device housings. The present invention includes a portable electronic device with a programmable housing.

### SUMMARY

Embodiments of the present invention include a portable device with a programmable housing that changes appearance in accordance with data inputs. In one embodiment, the present invention includes a programmable housing having an outer surface, wherein the outer surface forms the outer surface of at least a first portion of said portable device, and wherein the programmable housing comprises electronic paper that receives data from a data source, and in accordance therewith, changes the appearance of at least a portion of the programmable housing.

In another embodiment, the portable device further comprises a display, and the programmable housing further includes an opening having a perimeter that defines the viewable area of the display.

In another embodiment, the programmable housing changes appearance independent of the display.

In another embodiment, the portable device further comprises a software application for controlling the data loaded into the electronic paper. Data may be stored locally or remotely, and the portable device may download new data sets over a wireless network or over the internet.

In another embodiment, the portable device comprises a rigid housing having an outer surface, wherein the outer surface forms a contoured outer surface of at least a first portion of said portable device, electronic paper attached to at least a second portion of the outer surface of the rigid housing, the electronic paper having a first input for receiving power and a second input for receiving data, wherein the electronic paper forms a pattern corresponding to the data received on the second input, thereby changing the appearance of at least the second portion of the portable device.

In another embodiment, the electronic paper is electrically isolated from other electronics on the portable device and the electronic paper receives power or data from an external source.

In another embodiment, the electronic paper is electrically coupled to an internal power supply for receiving power and an internal memory for storing data corresponding to at least one pattern.

In another embodiment, the present invention includes a method of changing the appearance of a portable device housing comprising storing a plurality of sets of data, each set of data corresponding to a distinct housing appearance, receiving a first set of data from the plurality of sets of data in electronic paper, the electronic paper forming at least a portion of an outer surface of said portable device housing and changing the appearance of the portable device housing in accordance with the first set of data.

In another embodiment, the method further comprises automatically changing the pattern on the housing in response to a predefined event.

Additional embodiments will be evident from the following detailed description and accompanying drawings, which provide a better understanding of the nature and advantages of the present invention.

### BRIEF DESCRIPTION OF THE DRAWINGS

Figs. 1A-F illustrate a portable device according to one embodiment of the present invention.

Fig. 2 illustrates a portable device according to another embodiment of the present invention.

Figs. 3A-B illustrate the contours on the outer surface of a portable device 300 according to one embodiment of the present invention.

Fig. 3C is a cross-section of portable device 300.

Fig. 3D is another cross-section of portable device 300.

Fig. 3E is another cross-section of portable device 300.

Fig. 4 illustrates a programmable housing that receives power and data from an external source according to one embodiment of the present invention.

Fig. 5 illustrates a programmable housing that receives power and data from internal circuitry according to one embodiment of the present invention.

Fig. 6 illustrates electronic paper that covers the housing of a portable device and is electrically coupled to the portable device housing according to one embodiment of the present invention.

Fig. 7 is an example of portable device electronics according to one embodiment of the present invention.

Fig. 8 illustrates coupling a portable device to another system to change the appearance of the housing according to another embodiment of the present invention.

Fig. 9 illustrates a method according to one embodiment of the present invention.

### DETAILED DESCRIPTION

Described herein are techniques for changing the appearance of a portable device.
In the following description, for purposes of explanation, numerous examples and specific details are set forth in order to provide a thorough understanding of the present invention. It will be evident, however, to one skilled in the art that the present invention as defined by the claims may include some or all of the features in these examples alone or in combination with other features described below, and may further include obvious modifications and equivalents of the features and concepts described herein.

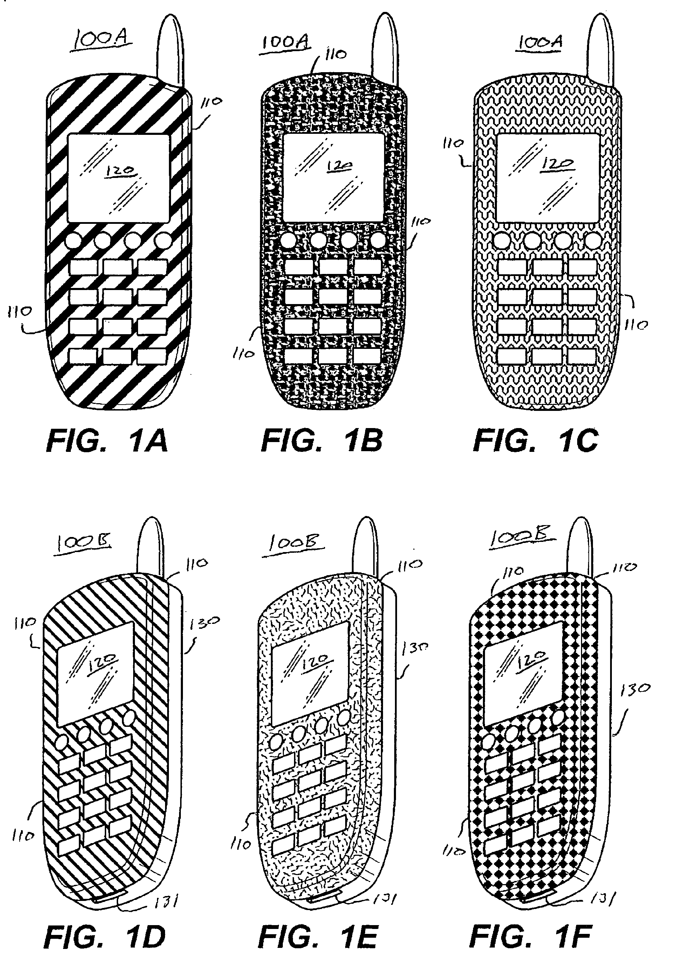

Figs. 1A-F illustrate a portable device according to one embodiment of the present invention. The portable device in this embodiment is a cell phone, but it is to be understood that other portable devices could also be used. Portable device 100A includes a programmable housing 110 and display 120. As used herein, the housing of a portable device means a structure that defines at least a portion of the outer surface of the portable device and provides a rigid or semi-rigid external frame for the device. The housing also typically covers at least some of the internal electronics and components of device. The complete housing of a portable device typically includes multiple component pieces or parts that are attached together to from a complete outer surface for the device. Contemporary LCD displays, on the other hand, are distinguishable from the housing because displays are internal components viewable through the housing.

Programmable housing 110 can be programmed to change appearance and present a variety of different images on the housing surface independent of display 120. Housing 110 includes an outer surface, which includes a layer of electronic paper. As described in more detail below, electronic paper receives a power source and data. The appearance of the electronic paper changes based on the data it receives. Electronic paper may be used as the entire housing or as only a portion of the housing for the portable device, or it may be used to cover portions of the housing. Thus, by incorporating a layer of electronic paper, the appearance of the housing may be programmed to change appearance in a variety of different ways as described herein.

In Fig. 1A, portable device housing 110 receives a first set of data and assumes a first appearance. In the example of Fig. 1A, the portable device is a cell phone, and the first set of data programs the housing to produce a first image (e.g., a stripped pattern) on the outer surface. In Fig. 1B, housing 110 receives a second set of data and assumes a second appearance. The second set of data programs the housing to produce a second image on the outer surface. In Fig. 1C, housing 110 receives a third set of data and assumes a third appearance. The third set of data programs the housing to produce yet another image on the outer surface. Figs. 1A-F illustrate that housing 110 may be programmed to assume a variety of different appearances by producing different images. Images may include different colors, patterns or a variety of other graphics.

Figs. 1D-F illustrate a portable device 100B wherein the programmable housing 110 only covers the front of the device. Portable device 100B further includes non-programmable (e.g., standard injection molded plastic) rear housing 130. In this case, programmable housing 110 and non-programmable housing 130 encapsulate the internal components of the phone and make up the phones outer surface. Further, as illustrated by Figs. 1D-F, programmable housing 110 includes an opening for LCD display 120, and housing 130 includes an opening for connector 131.

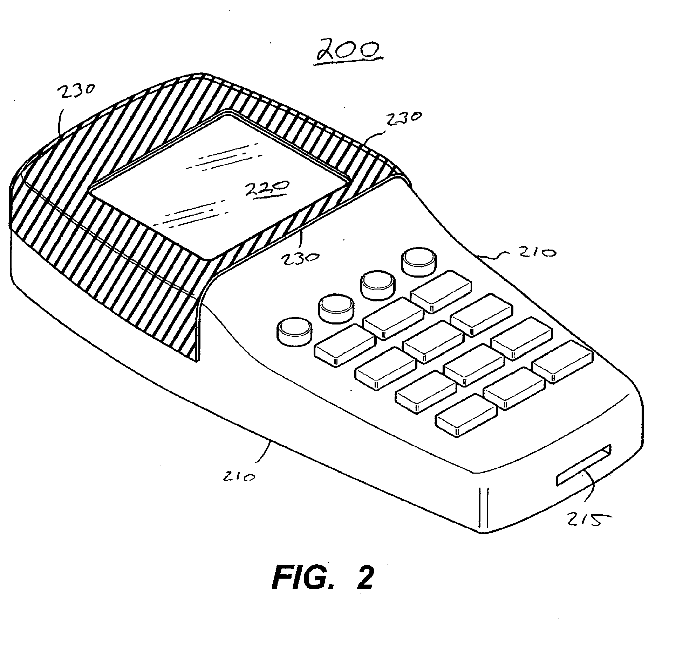

Fig. 2 illustrates a portable device according to another embodiment of the present invention. Portable device 200 includes a housing 210 that is partially covered by a layer of electronic paper 230. Housing 210 may include a connector 215 for receiving power or data from an external source. In this example, both the housing 210 and electronic paper 230 have openings for display 220. Thus, display 220 is a separate and distinct element from the housing 210 and electronic paper 230. In some embodiments, display 220 may also be electrically isolated from electronic paper 230, or alternatively, display 220 may function independently of electronic paper 230 (i.e., the images presented on display 220 may be completely independent of the images presented on electronic paper 230).

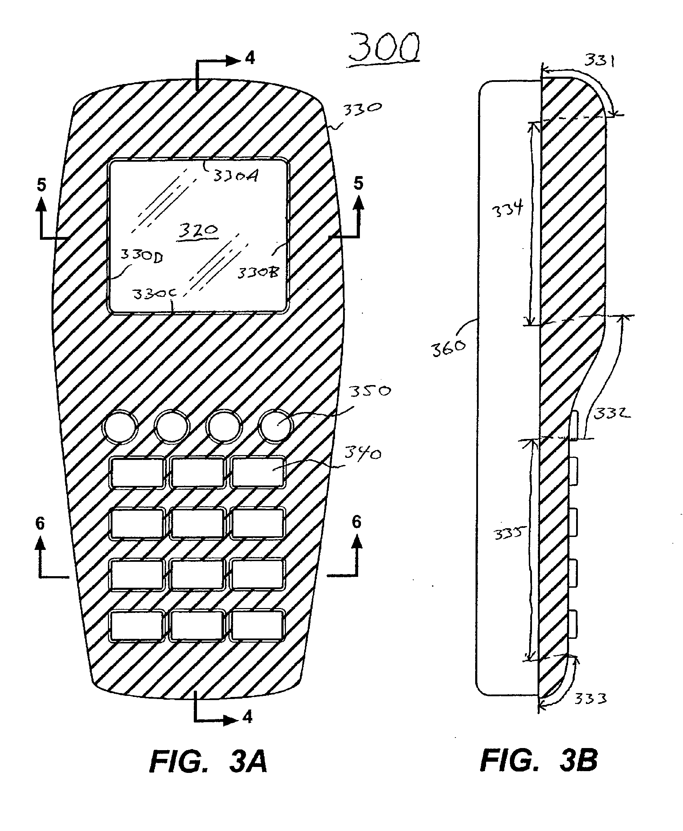

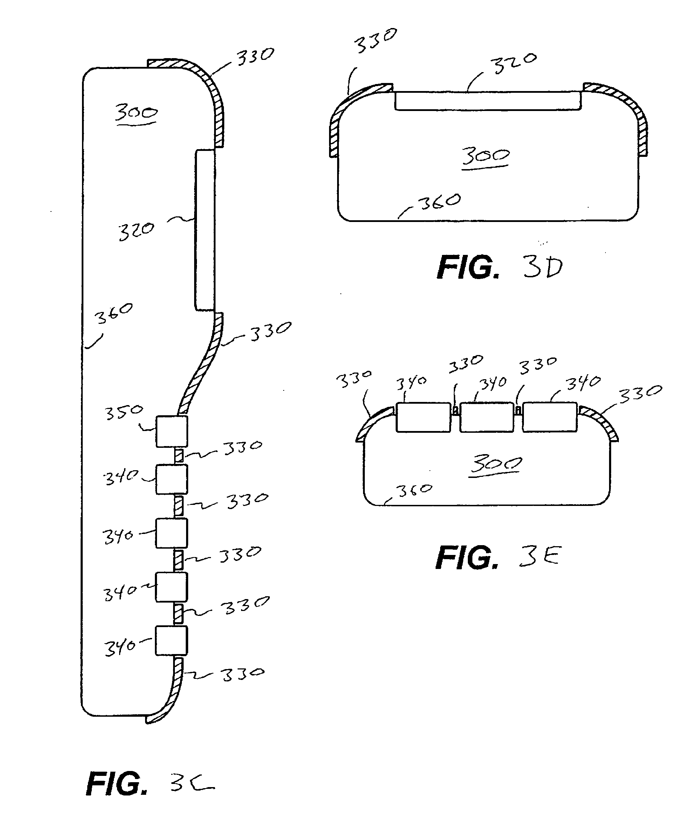

Figs. 3A-B illustrate the contours on the outer surface of a portable device 300 according to one embodiment of the present invention. Fig. 3A is a front view of portable device 300 and Fig. 3B is a side view of the same portable device 300. In this example, portable device 300 includes an upper programmable housing 330 comprising electronic paper and a lower non-programmable housing 360. Programmable housing 330 may include a layer of electronic paper on a rigid substrate, for example. Portable device 300 further includes an LCD display 320, buttons 340 (e.g., digits 0-9 and "*" and "#" keys of a phone), and may include additional buttons 350 for performing other functions. LCD display 320 is viewable through an opening in programmable housing 330 having a perimeter comprising sides 330A-D. The perimeter defines the viewable area of the display. Thus, as mentioned above, LCD display may present images separately and independently from programmable housing 330. Programmable housing 330 may be used to change the appearance of the portable device, for example, while LCD display is used simultaneously to present phone numbers, menus, or other information relating to the operation of the portable device.

As shown in Fig. 3B, portable device 300 may include an upper housing and a lower housing. In this example, only housing 330 may be programmable, whereas housing 360 may not programmable. Features and advantages of the present invention include providing a programmable housing 330 that may have a variety of contoured outer surfaces. As shown in Fig. 3B, the outer surface of housing 330 may include contours 331, 332, 333, 334 and 335. Embodiments of the present invention include a programmable housing having flat contours and curved contours, which LCD displays cannot accommodate. For example, housing 330 include flat surfaces 334 and 335. One advantage of the present invention is that electronic paper may be used to cover a conventional housing or as the housing itself, thereby providing a programmable housing with stylish curved features that can be programmed to change appearance. In Fig. 3B, curved contour 331 may be a smooth curved right angle for example, such as a quarter-arc of a circle. Curved contour 332 illustrates another contour for smoothly transitioning between flat surface 334 and flat surface 335. Of course, it is to be understood that flat surfaces from one direction (i.e., a side view) may be curved from another view. Because electronic paper is flexible, any of a variety of stylish contoured surfaces may be designed for the programmable housing.

Fig. 3C is a cross-section of portable device 300. The cross-section of portable device 300 if Fig. 3C is taken along a line between arrows 4 in Fig. 3A. This cross-section highlights the distinction between the LCD display 320, which is an internal component of the cell phone with a limited viewable area, and a programmable housing including electronic paper 330 that resides on the outer surface of the housing. LCD display 320 is only viewable through an opening defined in the housing, whereas programmable housing 330 is viewable across regions of the outer surface including electronic paper. Programmable housing 330 may include additional openings for buttons 340 or other external components that a user may need to access (e.g., connectors such as a USB input). Thus, programmable housing 330 can be used to change the appearance of the outer surface of the portable device. The complete outer surface of portable device 300 includes programmable housing 330, which in this case is the front of the phone, and non-programmable housing 360, which is the back of the phone in this example. Electronic paper may be used to cover a housing (e.g., bonding the electronic paper to an injection molded plastic housing) or as the housing itself (e.g., wherein the electronic paper includes a thick substrate that is molded according to a particular design to form the desired outer surface). It is to be understood that electronic paper could be used on the front of a portable device, back of a portable device, over the entire outer surface of a portable device, or used to cover any portion of the outer surface of a portable device.

Fig. 3D is another cross-section of portable device 300. The cross-section of portable device 300 shown in Fig. 3D is taken along a line between arrows 5 in Fig. 3A. This cross-section further highlights the distinction between the LCD display 320, which is an internal component of the cell phone with a limited viewable area, and a programmable housing including electronic paper 330 that resides on the outer surface of the housing. Fig. 3D also further illustrates an embodiment where non-programmable housing 360 forms the outer surface for the back or rear side of the portable device. Fig. 3E is another cross-section of portable device 300. The cross-section of portable device 300 shown in Fig. 3E is taken along a line between arrows 6 in Fig. 3A. The cross-section of portable device 300 shown in Fig. 3E illustrates that additional openings may be made in the programmable housing 330 to expose other internal components, such as buttons 340.

As illustrated above, embodiments of the present invention include using electronic paper to change the appearance of the outer surface of the housing of a portable device. Electronic paper, sometimes referred to as "electronic ink," is a display technology that uses small multicolored (e.g., black and white) cavities (e.g., microcapsules or plastic balls) that can be positioned using an electric field. The cavities can be organized as cells, similar to pixels, for addressing and control by external circuits. Electronic paper is thin and flexible and can be bonded, laminated or equivalently attached to a plastic or metal substrate, for example. Example electronic paper includes electronic ink from E Ink® or electronic paper from Xerox® or Gyricon, LLC.

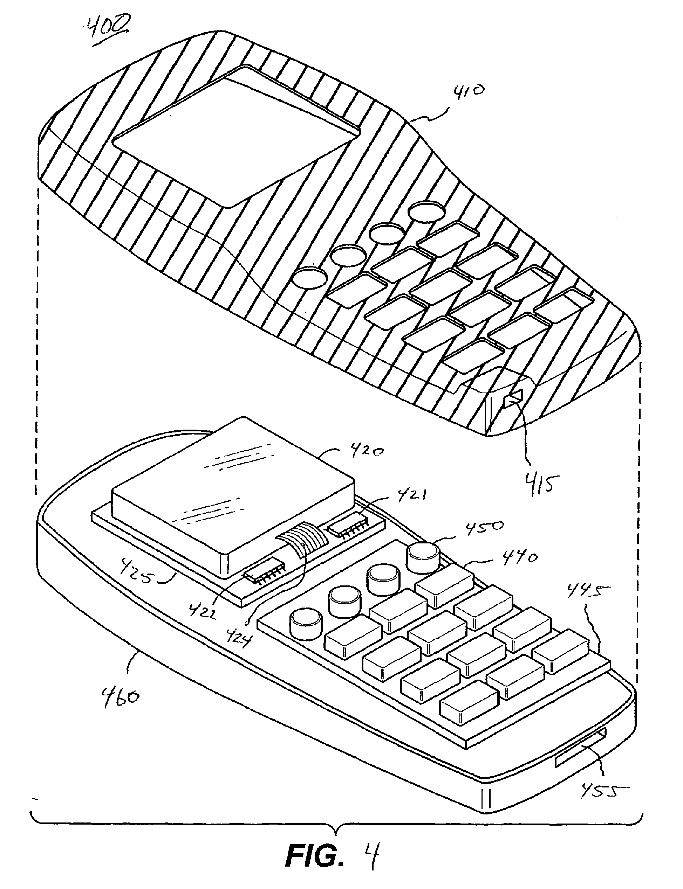

Embodiments of the present invention include programmable housings that may receive power and/or data directly from an external source. Fig. 4 illustrates a portable device 400 including a programmable housing that receives power and data from an external source. In this embodiment, the programmable housing 410 is electrically separated from other electronics of portable device 400. Programmable housing 410 receives power and data for programming the electronic paper via electrical input 415. Electrical input 415 may include a USB input, Firewire, or any other mechanism for coupling a power source and data source to programmable housing 410.

In this embodiment, electronic paper is used as the programmable housing for the entire faceplate of a portable device. Thus, the appearance of the entire outer surface of the housing may be changed. Portable device 400 also includes a rear housing 460 that forms the rear outer surface. Programmable housing 410 and rear housing 460 may be used as a frame for internal electronics including an internal LCD display 420, integrated circuits 421-422, circuit board 425, ribbon cable 424 for connecting the LCD to the circuit board, buttons 440 and 450 and a second circuit board 445. A variety of different circuits may be used for the internal electronics of portable devices according to different embodiments of the present invention. Internal electronics may also be coupled to an external source via electrical input 455. Portable device 400 may receive power from an external source through electrical input 455 and may further include an internal power source such as a battery (not shown) for example. While both power and data are received from an external source in this embodiment, it is to be understood that the housing may receive only power or data externally and the other (i.e., data or power, respectively) internally.

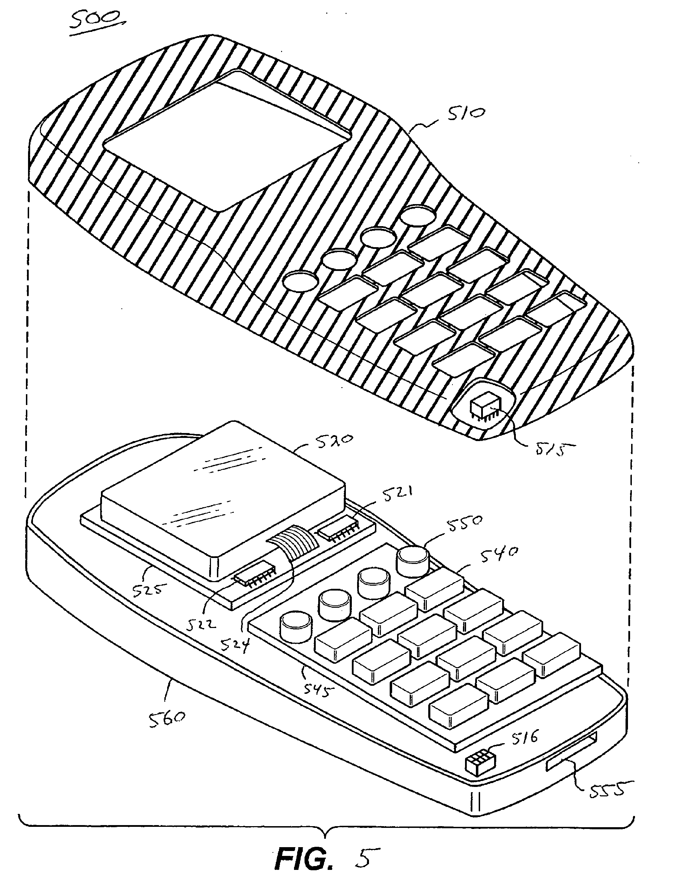

Fig. 5 illustrates a portable device 500 including a programmable housing that receives power and data from internal circuitry. In this embodiment, programmable housing 510 is electrically coupled to other electronics of portable device 500. Programmable housing 510 receives power and data for programming the electronic paper via electrical input 515. Electrical input 515 is coupled to the internal electronics via connector 516.

In this embodiment, electronic paper is again used as the programmable housing for the entire faceplate of a portable device. Thus, the appearance of the entire outer surface of the housing may change. The electronic paper may also change independently from the LCD display 520. The portable device also includes a rear housing 560 that forms the rear outer surface. Programmable housing 510 and rear housing 560 may be used as a frame for internal electronics including an internal LCD display 520, integrated circuits 521-522, circuit board 525, ribbon cable 524 for connecting the LCD to the circuit board, buttons 540 and 550 and a second circuit board 545. Programmable housing 510 and the internal electronics of the device may be coupled to an external source via electrical input 555. Portable device 500 may receive power and/or data from an external source through electrical input 555 and may further include an internal power source such as a battery (not shown) for example.

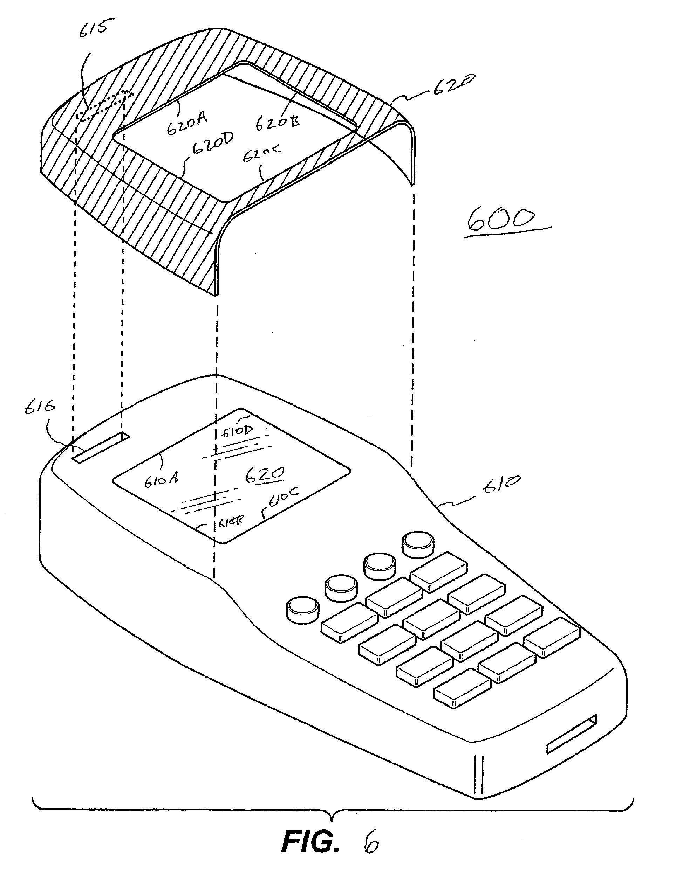

Fig. 6 illustrates electronic paper that covers the housing of a portable device 600 and is electrically coupled to the portable device housing according to one embodiment of the present invention. In this embodiment, electronic paper 620 is bonded, laminated or otherwise attached to housing 610 of portable device 600. Electronic paper 620 includes an electrical connection 615 (e.g., a plurality discrete conductive pads) for receiving power and data. Electrical connection 615 is electrically coupled to connector 616 to electrically couple electronic paper 620 to internal electronics (not shown) of portable device 600. Electronic paper 620 includes an opening so that a user can view an LCD display 620 inside housing 610 of portable device 600. The opening in electronic paper 620 includes sidewalls 620A-D, which in this case are approximately the same dimensions as the sidewalls 610A-D of the opening in housing 610.

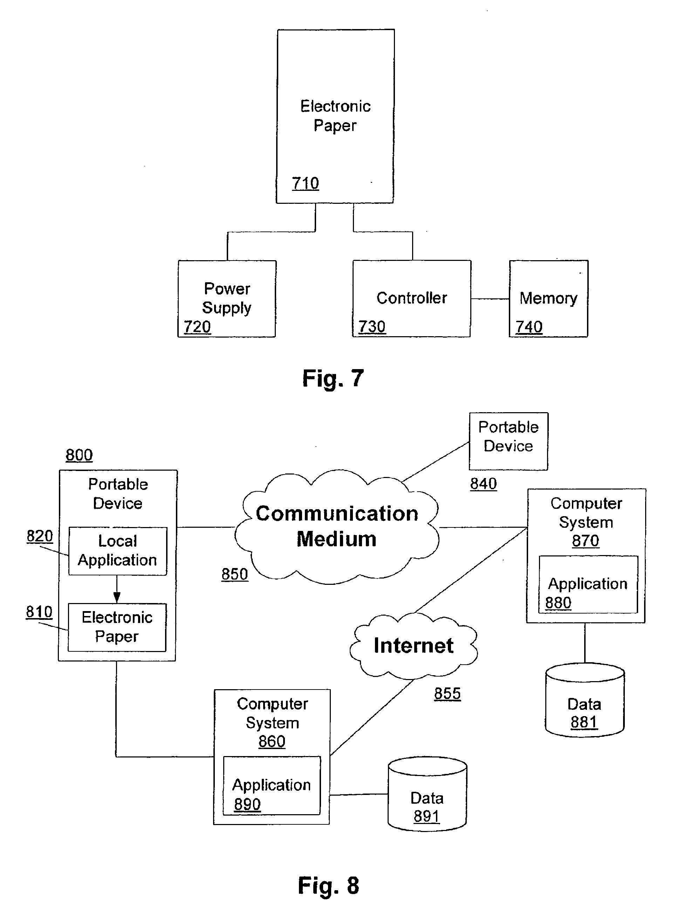

Fig. 7 illustrates a portable device according to one embodiment of the present invention. For example, a portable device includes electronic paper 710 as described above. Electronic paper 710 is coupled to a power supply 720 for receiving power. Electronic paper 710 is also coupled to a controller 730, which may control the images or algorithms for electronic paper 710. Controller 730 is coupled to memory 740. Memory 740 may store data for programming the electronic paper 710. For example, memory 740 may include data corresponding to different images that will be loaded into electronic paper 710 to change the appearance of the portable device outer surface. In some embodiments, electronic paper 710 may only require a power source during programming. Thus, power supply 720, controller 730 and memory 740 may be part of a remote system (e.g., part of a personal computer system), and electronic paper 710 may include separate external connections to connect to the remote system (e.g., through a docking station) to receive power and data as illustrated in Fig. 4. Alternatively, electronic paper 710 may be coupled to the internal electronics of the portable device for receiving power and data as illustrated in Figs. 5-6. In this case, power supply 720, controller 730 and memory 740 may be included as part of the portable device.

Fig. 8 illustrates coupling a portable device to another system to change the appearance of the housing according to another embodiment of the present invention. As illustrated above, features and advantages of the present invention include loading data into a portable device to program the appearance of a housing. For example, in one embodiment a portable device 800 includes a local software application 820 for controlling the appearance of the programmable housing. Electronic paper 810 may be coupled to the internal electronics of the portable device for changing the image on the housing under the control of software application 820. Application 820 may be used to change between images stored locally on portable device 800 or to select or define image control algorithms such as those disclosed in more detail below, for example. Application 820 may further facilitate the transfer of various images from memory into electronic paper 810.

In one embodiment, portable device 800 may receive image data for the programmable housing from an external source and load the data into electronic paper 810. For example, portable device 800 may be coupled to a remote computer system 870 through a communication medium 850. Communication medium 850 may include a wireless network, and may further include a computer network, such as the Internet, or equivalent network, for example. Remote computer system 870 may be a web server that allows a user to access and download a variety of different images to program and change the appearance of the housing. Embodiments of the present invention include making new designs and algorithms available to users through an Internet website so that new designs and algorithms can be developed and provided to users (e.g., for a fee) wirelessly. It is to be understood that a variety of techniques may be used to allow portable device 800 to access remote image data wirelessly.

Remote computer system 870 may include a software application 880 that allows users to create, store, access and/or share personalized programmable housing outer surface appearances. Application 880 may allow users to generate both designs (e.g., images such as patterns or color combinations) and algorithms (e.g., changing images) for changing the appearance of a portable device. For example, application 880 may be coupled to a repository, such as a database 881 for storing a library of housing designs (i.e., data for the electronic paper). Application 880 may further allow users to access and download selected designs from the library of designs. Additionally, application 880 may provide users with tools for changing or creating images such as colors, patterns, logos or other graphics that can be loaded into a portable device and used to program the electronic paper to change the appearance of the portable device housing. In one embodiment, a user may access computer system 870 over the Internet. The user may select the type of portable device from portable devices supported by the system. In response to selecting the device, the user may be presented with a pre-stored 3-dimensional rendering of the device. The rendering may display a 3D image of the contours of the device, the location of the LCD display, buttons and connectors. The user may also be presented with a palette of tools that may be used to design patterns or other images for the device. The user may be allowed to zoom in on sections of the rendering and create the appearance of the housing by applying patterns or colors on the 3D rendering, for example. Once the user has completed the design, the user may save the design for downloading into a portable device at a later time. In another embodiment, the user may search the Internet for professionally created designs and store the designs in a library of "favorites" (e.g., MyPhone Design). The user may then wirelessly access remote computer system 870, select one of the available designs, download the data into the portable device 800, and load the data into the electronic paper for changing the appearance of the device.

In one embodiment, image data for changing the appearance of the housing may be transmitted between portable device 800 and another portable device 840. For example, friends or colleagues may share portable device designs simply by transferring the image data for the electronic paper between portable devices. The data may be transferred between portable devices using a wireless network (e.g., in the same or similar manner that voice data is passed between cell phones during a phone call) or by other equivalent wireless mechanisms such as infrared, for example.

In one embodiment, portable device 800 may received image data from a local computer system such as a personal computer system ("PC") 860. In this embodiment, portable device 800 may communicate with PC 860 over a universal serial bus ("USB") or similar industry standard wired connection, for example. Portable device 800 may include a docking station for connecting to PC 860. When the portable device 800 is in the docking station, the device may be accessible through the PC. Data for programming the appearance of the housing may be loaded from PC 860 using software application 890. Data may be stored locally as files in a directory or in a database 891, for example. Data may also be downloaded into portable device 800 through PC 860 from remote computer system 870 over the Internet 855. Application 890 may also allow users to create, store, and/or access designs on local computer system 860 in the same or similar manner as describe above for application 880. Application 890 may also be used to define algorithms as will now be described.

In one embodiment, software application 820 executes an algorithm for changing data in the electronic paper automatically upon the occurrence of a predefined event. Further, applications 820, 880 and 890 may also allow users to define the algorithms that are executed on portable device 800 to change the appearance of the device automatically. For example, such applications may allow a user to define "events" that trigger a change of data in the electronic paper, thereby automatically changing the external appearance of the housing. In particular, in many situations, such as business meetings or romantic dinners, it is not considered polite to repeatedly stare at the tiny screen of a portable device in order to check for incoming messages, neither is it considered polite to have sound notifications for such events. Embodiments of the present invention may include a way to discretely notify the user of events of choice (e.g., if the portable device is in sight of its user). In one embodiment, the portable device 800 may automatically load a new data set into electronic paper 810 upon the occurrence of a predefined event, thereby turning the housing of the device from one color into a different color or from one pattern into a different pattern. When the user sees the device change appearance, the user can be alerted to the occurrence of the predefined event. Additionally, a user may program more than one event, so that different changes signal to the user the occurrence of different events.

Algorithms according to embodiments of the present invention may change the appearance of the portable device in response to receiving a call, text message or email, for example, from a predefined source (telephone number, email address, etc...) or person or with a predefined subject. Using applications 810, 880 or 890, a user may define an expected event or events that may trigger different changes in the appearance of the portable device. For example, the user may specify solid white as the default pattern of the portable device. The user may further specify that receiving a phone call from a first person will cause the portable device to change from solid white to blue, that receiving a phone call from a second person will cause the portable device to change from solid white to a first pattern, and that receiving a text message from a third person will cause the portable device to change from solid white to a second pattern. Of course, these are just examples. A variety of activities could be used to define events and any electronic paper data sets (i.e., device appearances) could be used to signal the occurrence of the event. Other events where new data is transferred to the electronic paper to change the appearance of the portable device may include appointments or other reminders signaled by dates or times, incoming calls (general and from predefined persons), pages or battery power indications to name just a few.

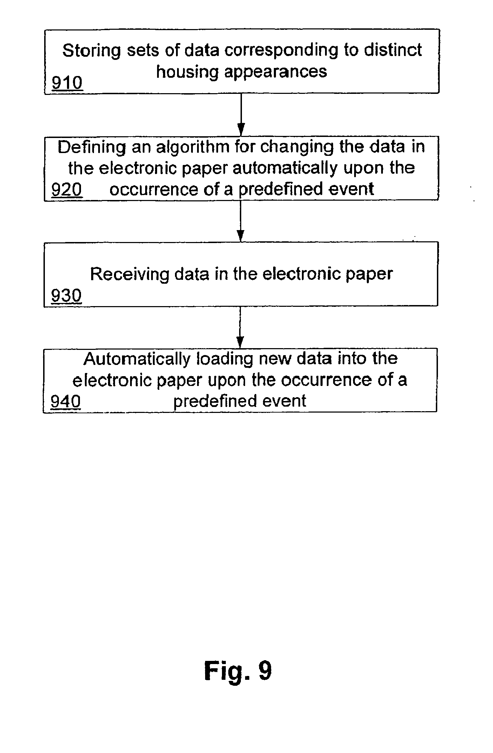

Fig. 9 illustrates a method according to one embodiment of the present invention. At 910, sets of data corresponding to distinct housing appearances are stored. As illustrated above, data for a single image or multiple images may be stored in the portable device. Additional images may be stored on a local or remote computer system and accesses wirelessly or over a wired connection, such as a USB cable to a local PC or over the Internet to a remote computer system. At 920, a user may define an algorithm for changing the data in the electronic paper automatically upon the occurrence of a predefined event. For example, a user may define events (e.g., receiving a telephone call from a specific user or receiving an email with a specific subject) and the colors, patterns or other images that are displayed as a result of each event. At 930, data may be received in the electronic paper. Consequently, the housing of the portable device will assume an appearance corresponding to the data. At 940, new data is automatically loaded into the electronic paper upon the occurrence of a predefined event, thereby automatically changing the appearance of the device housing.

The present invention may be used in a variety of other applications for portable devices. In one embodiment a programmable housing using electronic paper may be used as a battery status indicator or signal strength indicator. For example, electronic paper may cover only a portion of the housing (e.g., on the side of a cell phone), and the electronic paper may include a display a bar that shows the percentage of energy left in the battery. Similarly, electronic paper on the phone could give an indication of the strength of the signal being received by the phone, for example, by providing an image on the outer surface of the phone with five segments (i.e., a bar graph showing signal strength). Offloading this information from the LCD display frees up the display for other uses.

In yet another application, a programmable housing may be used in conjunction with a mobile phone camera. Application software on the mobile phone could take an image using the built-in digital camera and display the image on the cover of the phone, for example. An end user could, for example, take a picture of the pattern on her dress before putting it on in the morning, and have the pattern displayed on the cover of her mobile phone for the entire day. In one embodiment, a software application performs transformation on the picture, for example, by extracting the texture from the picture and mapping it on the electronic paper so as to take into account the shape of the outer surface of the phone, which results in a more uniform and aesthetically pleasing cover.

The above description illustrates various embodiments of the present invention along with examples of how aspects of the present invention may be implemented. The above examples and embodiments should not be deemed to be the only embodiments, and are presented to illustrate the flexibility and advantages of the present invention as defined by the following claims. For example, many types of portable devices according to the present invention may include some or all of the innovative features described above. Based on the above disclosure and the following claims, other arrangements, embodiments, implementations and equivalents will be evident to those skilled in the art and may be employed without departing from the spirit and scope of the invention as defined by the claims.

## Claims

1. A portable device comprising a programmable housing having an outer surface, wherein the outer surface of the programmable housing forms the outer surface of at least a first portion of said portable device, and wherein the programmable housing comprises electronic paper that receives data from a data source, and in accordance therewith, changes the appearance of at least a second portion of the programmable housing.

2. The portable device of claim 1 further comprising a display, wherein the programmable housing further includes an opening having a perimeter that defines a viewable area of the display.

3. The portable device of claim 1 or 2 wherein the programmable housing changes appearance independent of the display.

4. The portable device of anyone of the preceding claims wherein the programmable housing receives a first set of data, and in accordance therewith, the first set of data programs the housing to produce a first image on the outer surface of the programmable housing, and wherein the programmable housing receives a second set of data, and in accordance therewith, the second set of data programs the housing to produce a second image on the outer surface of the programmable housing.

5. The portable device of anyone of the preceding claims further comprising a software application for controlling the data loaded into the electronic paper.

6. The portable device of anyone of the preceding claims wherein the programmable housing includes a flat or curved contour.

7. The portable device of anyone of the preceding claims wherein the electronic paper is electrically coupled to a power supply, a controller and a memory in the portable device, and wherein the memory includes a plurality of data sets corresponding to a plurality of images to be loaded into the electronic paper for changing the appearance of the programmable housing.

8. A portable device comprising:
a rigid housing having an outer surface, wherein the outer surface forms a contoured outer surface of at least a first portion of said portable device; and
electronic paper attached to at least a second portion of the outer surface of the rigid housing, the electronic paper having a first input for receiving power and a second input for receiving data,
wherein the electronic paper forms an image corresponding to the data received on the second input, thereby changing the appearance of at least the second portion of the portable device.

9. The portable device of claim 8 wherein the electronic paper is electrically isolated from other electronics on the portable device and the electronic paper receives power or data from an external source.

10. The portable device of claim 8 wherein the electronic paper is electrically coupled to an internal power supply for receiving power and an internal memory for storing data corresponding to at least one image.

11. The portable device of claim 8 wherein the electronic paper receives data corresponding to a plurality of images from a remote computer.

12. The portable device of anyone of claims 8 to 11 further comprising a software application for controlling the data loaded into the electronic paper.

13. The portable device of claim 12 wherein the software application downloads data corresponding to an image over a wireless network.

14. The portable device of claim 12 or 13 wherein the software application executes an algorithm for changing data in the electronic paper automatically upon the occurrence of a predefined event.

15. A method of changing the appearance of a portable device housing comprising:
storing a plurality of sets of data, each set of data corresponding to a distinct housing appearance;
receiving a first set of data from the plurality of sets of data in electronic paper, the electronic paper forming at least a portion of an outer surface of said portable device housing; and
changing the appearance of the portable device housing in accordance with the first set of data.

16. The portable device of claim 15 further comprising automatically changing data sets in response to a predefined event.

17. The portable device of claim 15 or 16 further comprising downloading data corresponding to a distinct housing appearance over a wireless network.

18. The portable device of anyone of claims 15 to 17 wherein the plurality of sets of data are stored on a local or remote computer system.

19. The portable device of anyone of claims 15 to 18 further comprising providing a user with tools for changing or creating images that can be loaded into the portable device housing and used to program the electronic paper to change the appearance of the portable device housing.

20. The portable device of claim 19 further comprising storing a plurality of renderings corresponding to different shapes of housings for a plurality of different portable devices.
